# EUROPEAN PATENT APPLICATION

(11) **EP 4 530 970 A1**
(43) Date of publication of application: **02.04.2025**
(21) Application number: 23199799.0
(22) Date of filing: 26.09.2023
(51) Int. Cl.: G06T 5/60, G06T 5/70

(54) **SYSTEMS AND METHODS FOR GENERATING TRAINING DATA, FOR TRAINING AND APPLICATION OF MACHINE LEARNING ALGORITHMS FOR IMAGES**

(71) Applicant: Leica Instruments (Singapore) Pte Ltd, Singapore 608924 (SG)
(72) Inventor: DR. ORMAZ, Milo, 608924 Singapore (SG)
(74) Representative: Paustian & Partner Patentanwälte mbB

(57) **Abstract**

The present invention essentially relates to a system (150) comprising one or more processors (152) and one or more storage devices (154), for generating training data for training of a machine-learning algorithm, wherein the system is configured to: receive a fluorescence image (129, 129') of an object (112, 162), wherein the fluorescence image (129, 129') has been obtained using a surgical imaging system (100); generate an amplified fluorescence image (132, 132'), based on the fluorescence image (128); generate an image pair (134), the image pair comprising the fluorescence image (129, 129') and the amplified fluorescence image (132, 132'); and provide the image pair (134) for training of a machine-learning algorithm, wherein the machine-learning algorithm is to be trained for use with said or another surgical imaging system.

## Description

### Technical Field

The present invention essentially relates to a system and a method for generating training data for a machine-learning algorithm, based on fluorescence images, from a surgical imaging system, to a system and a method for training such a machine-learning algorithm, to a trained machine-learning algorithm, and to a system and a method for the application of such machine-learning algorithm.

### Background

In surgical microscopy or other kind of surgical imaging, e.g., for tumour surgeries or the like, a surgeon can view the surgical site or the patient by using the surgical imaging system. Tissue or sections thereof to be resected or removed, e.g., tumour tissue, can be supplied with fluorophores or other markers such that relevant sections appear coloured when illuminated with appropriate excitation light. Fluorescence images obtained from such tissue or other objects can be noisy.

### Summary

In view of the situation described above, there is a need for improvement in providing fluorescence images. According to embodiments of the invention, a system and a method for generating training data for a machine-learning algorithm, a system and a method for training a machine-learning algorithm, a trained machine-learning algorithm, and a system and a method for the application of such machine-learning algorithm with the features of the independent claims are proposed. Advantageous further developments form the subject matter of the dependent claims and of the subsequent description.

An embodiment of the invention relates to a system comprising one or more processors and one or more storage devices, for generating training data for training of a machine-learning algorithm. The system is configured to receive a fluorescence image of an object, wherein the fluorescence image has been obtained using a surgical imaging system like a surgical microscope or a surgical endoscope or other kind of imaging system used in surgeries. In an embodiment, the fluorescence image has been obtained from an original fluorescence image by removing at least a part of or all signals that are not fluorescence signals, wherein the original fluorescence image has been acquired by means of the surgical imaging system. In other words, the fluorescence image can be an image exhibiting only fluorescence signals.

The system is further reconfigured to generate an amplified fluorescence image, based on the fluorescence image, and to generate an image pair, the image pair comprising the fluorescence image and the amplified fluorescence image. The system is further configured to provide the image pair for training of a machine-learning algorithm, wherein the machine-learning algorithm is to be trained for use with said or another surgical imaging system. It is noted that these steps can be repeated for multiple pairs of fluorescence images and amplified fluorescence images, in order to provide sufficient training data.

In surgeries, objects like tumour and other harmful tissue can be resected or removed from a patient or a patient's brain, non-harmful tissue or the like. As mentioned before, such (harmful) sections of tissue can be marked by means of fluorophores or other staining material or markers, typically given to the patient. A typical fluorophore for marking harmful tissue like tumour is, but not limited to, 5-ALA (5-aminolevulinic acid). There are also other fluorophores that might be used. During the surgery, the surgical site is then illuminated with excitation light of appropriate wavelength for exciting the fluorophore or marker to emit fluorescence light. This emitted light can be captured or acquired by the surgical imaging system or an imager (image sensor) thereof and, e.g., be displayed on a display. Fluorescence images are used here; the imaging method is also called fluorescence imaging. In this way, the surgeon can easily identify tissue to be resected, or whether tissue to be resected is still present. It is noted that highlighting particular tissue or other objects by means of fluorescence can also have other reason than resection.

Since such fluorescence images, even after having removed all signals but fluorescence signals, often show only weak fluorescence intensity which can be too weak for a surgeon to identify relevant regions in the image, such fluorescence images can be amplified, resulting in better visibility of the fluorescence signal in the images. In addition, anatomy or other non-relevant regions can be removed from such amplified fluorescence image in order to increase the contrast of fluorescence signal and even better show the relevant fluorescence signals.

It has been recognized, however, that typically the amplified fluorescence images are too noisy in order to sufficiently accurately detect these edges. This requires de-noising of the amplified fluorescence images. A way of de-noising such images is using low pass filtering, e.g., Gaussian or median filtering. This, however, turned out to result in smeared edges.

Using a machine-learning algorithm, e.g., an artificial neural network, however, turned out to preserve the edges when used for de-noising. Such machine-learning algorithm, in turn, needs to be trained before it can be applied, and this requires sufficient and reasonable training data. The way of generating training data as proposed above allows quick and efficient provision of sufficiently good training data. This can, in particular, be automated.

According to a further embodiment, said the fluorescence image has been obtained by means of the surgical imaging system during a surgery, and the amplified fluorescence image is generated, based on the fluorescence image, comprising amplifying at least a part of or all signal values of the fluorescence image. In this way, the training data can be obtained during surgeries which are done anyway. In this case, the object can be a human or a part of a human like a brain or other tissue or the like.

According to a further embodiment, the object, from which the fluorescence image has been obtained, comprises a test object having multiple fluorophore targets (e.g., many spots) of different fluorophore concentration (e.g., 5-ALA), and the amplified fluorescence image is generated, based on the fluorescence image, comprising applying a noise-generating technique. A specific test card can be used as such test object, for example. This allows defining specific use cases via the test object.

Another embodiment of the invention relates to controller for a surgical imaging system, e.g., a surgical microscope or the like. The controller comprises or is configured as the system described above, and the surgical imaging system is configured to perform a fluorescence imaging mode. In the fluorescence imaging mode, the surgical imaging system is configured to acquire fluorescence light images of the object. The controller is then configured to control the surgical imaging system to obtain the fluorescence image of the object. Depending on the surgical imaging system, it might also be configured to perform a white light imaging mode. In the white light imaging mode, the surgical imaging system is configured to acquire white light images of the object. The white light images, however, are not necessarily required for the training data or the denoising.

Another embodiment of the invention relates to a computer-implemented method generating training data for training of a machine-learning algorithm. The method comprises receiving a fluorescence image of an object, wherein the fluorescence image has been obtained using a surgical imaging system. The method further comprises generating an amplified fluorescence image, based on the fluorescence image, generating an image pair, the image pair comprising the fluorescence image and the amplified fluorescence image, and providing the image pair for training of a machine-learning algorithm, wherein the machine-learning algorithm is to be trained for use with said or another surgical imaging system.

Another embodiment of the invention relates to a system comprising one or more processors and one or more storage devices, for training of a machine-learning algorithm. The system is configured to receive training data, the training data comprising: multiple image pairs, each image pair comprising a fluorescence image of an object and an amplified fluorescence image of the object, wherein, for at least one of the multiple image pairs, the fluorescence image has been obtained using a surgical imaging system, and the amplified fluorescence image has been generated, based on the fluorescence image. The system is further configured to adjust the machine-learning algorithm (or, weights used therein) based on the training data, such that the machine-learning algorithm reduces noise of a target amplified fluorescence image. The fluorescence images are used as ground truth. The system is further configured to provide the trained machine learning algorithm for use with said or another surgical imaging system. In this way, an efficient and quick way of training is achieved. Using images that are obtained using a real system can improve the final outcome.

In an embodiment the machine-learning algorithm is or is based on a Convolutional Neural Network (CNN). Preferably, such neural network allows non-linear de-noising. An example of such CNN is PRIDNet convolutional neural network for image denoising (Pyramid Real Image Denoising Network).

Another embodiment of the invention relates to a trained machine-learning algorithm for use with a surgical imaging system. The machine-learning algorithm is trained by receiving training data, the training data comprising: multiple image pairs, each image pair comprising a fluorescence image of an object and an amplified fluorescence image of the object. For at least one of the multiple image pairs, the fluorescence image has been obtained using said or another surgical imaging system, and the amplified fluorescence image has been generated, based on the fluorescence image, comprising amplifying at least a part of or all signal values of the fluorescence image. The machine-learning algorithm is further trained by adjusting the machine learning algorithm based on the training data, such that the machine-learning algorithm reduces noise of a target amplified fluorescence image, wherein the fluorescence images are used as ground truth.

Another embodiment of the invention relates to a computer-implemented method for training of a machine-learning algorithm. The method comprises receiving training data, the training data comprising: multiple image pairs, each image pair comprising a fluorescence image of an object and an amplified fluorescence image of the object. For at least one of the multiple image pairs, the fluorescence image has been obtained using a surgical imaging system, and the amplified fluorescence image has been generated, based on the fluorescence image. The method further comprises adjusting the machine-learning algorithm based on the training data, such that the machine-learning algorithm reduces noise of a target amplified fluorescence image, wherein the fluorescence images are used as ground truth. The method further comprises providing the trained machine learning algorithm for use with said or another surgical imaging system.

Another embodiment of the invention relates to a system comprising one or more processors and one or more storage devices, for reducing noise in an amplified fluorescence image. In other words, this system can be used to apply a trained machine-learning algorithm. The system is configured to receive input data, the input data comprising: an amplified fluorescence image of an object, wherein the amplified fluorescence image has been generated based on a fluorescence image obtained using a surgical imaging system during a surgery. The system is further configured to reduce noise in the amplified fluorescence image, by applying the trained machine-learning algorithm mentioned above, in order to obtain a de-noised amplified fluorescence image. The system is further configured to provide output data, the output data comprising the de-noised amplified fluorescence image. For example, such de-noised amplified fluorescence image can be provided on a display to a surgeon or it can be further processed. It is noted that this can be repeated with every amplified fluorescence image received, e.g., from a video stream, resulting in a video stream of de-noised amplified fluorescence images.

In an embodiment the system is further configured to detect, in the de-noised amplified fluorescence image, edges of the fluorescence signal shown in the de-noised amplified fluorescence image. In the de-noised amplified fluorescence image, the edges can much better be identified than in the amplified fluorescence image.

In an embodiment the system is further configured to compose said detected edges with a background image of the object, in order to obtain a composite image. For example, the detected edges can be overlaid with the background image. Said background image has been generated based on said fluorescence image. The system is further configured to provide said composite image. The background image can be, for example, an anatomy image that shows the actual object or tissue (e.g., brain). The background image is, preferably, also generated based on the fluorescence image. Such composite image can, for example, be provided on a display to a surgeon or another user. In this way, the object, e.g., tissue to be resected, can much better and more accurately be identified.

Another embodiment of the invention relates to a controller for a surgical imaging system. The controller comprises or is configured as the system as described above, wherein the surgical imaging system is configured to perform a fluorescence imaging mode, wherein, in the fluorescence imaging mode, the surgical imaging system is configured to acquire fluorescence images of an object Further, the controller is configured to control the surgical imaging system to obtain the fluorescence image.

Another embodiment of the invention relates to a surgical system, comprising a surgical imaging system with an image sensor and the system as described above or the controller described above. The surgical imaging system is configured to perform a fluorescence imaging mode, wherein, in the fluorescence imaging mode, the surgical imaging system is configured to acquire fluorescence images of the object.

It is noted that the surgical imaging system or its controller can be used for both, generating the training data and applying the trained machine-learning algorithm. However, also different but, e.g., similar surgical imaging systems or controllers can be used for the two different aspects. In addition, the training data can, for example, be obtained using a specific surgical imaging system or its controller and the machine-learning algorithm trained based on it can be applied with multiple similar or other surgical imaging systems or its controllers.

Another embodiment of the invention relates a computer-implemented method for reducing noise in an amplified fluorescence image, i.e., a method for applying the trained machine-learning algorithm. The method comprises receiving input data, the input data comprising an amplified fluorescence image of an object, wherein the amplified fluorescence image has been generated based on a fluorescence image obtained using a surgical imaging system during a surgery. The method further comprises reducing noise in the amplified fluorescence image, by applying the trained machine-learning mentioned above, in order to obtain a de-noised amplified fluorescence image. The method further comprises providing output data, the output data comprising the de-noised amplified fluorescence image.

With respect to advantages and further embodiments of the methods and controllers, it is referred to the remarks of the systems, which apply here correspondingly.

A further embodiment of the invention relates to a computer program with a program code for performing one of the methods of above, when the computer program is run on a processor.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

### Short description of the Figures

- Fig. 1: schematically shows a system for generating training data for training of a machine-learning algorithm according to an embodiment of the invention;
- Fig. 2: schematically shows a system for training of a machine-learning algorithm according to further embodiment of the invention;
- Fig. 3: schematically shows a system for reducing noise in an amplified fluorescence image according to a further embodiment of the invention;
- Fig. 4: schematically shows a way of how to use a de-noised image according to a further embodiment of the invention;
- Fig. 5: schematically shows a method for generating training data for training of a machine-learning algorithm according to an embodiment of the invention;
- Fig. 6: schematically shows a method for training of a machine-learning algorithm according to a further embodiment of the invention; and
- Fig. 7: schematically shows a method for reducing noise in an amplified fluorescence image according to a further embodiment of the invention.

### Detailed Description

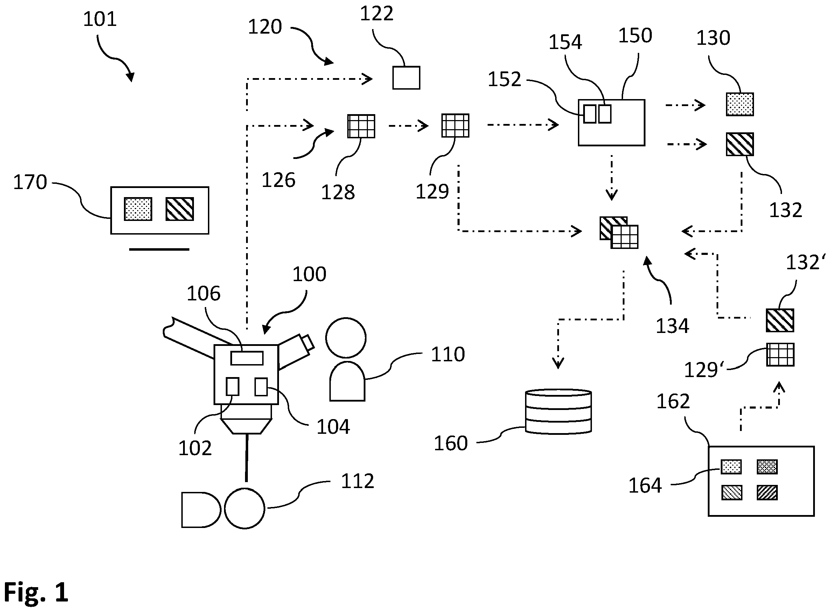

Fig. 1 schematically illustrates a system 150 for generating training data for training of a machine-learning algorithm according to an embodiment of the invention. The system 150 comprises one or more processors 152 and one or more storage devices 154. In an embodiment, system 150 is configured as a controller for a surgical imaging system 100 also shown in Fig. 1. The surgical imaging system 100 and the controller 150 can be part of a surgical system 101.

System 150 is configured to receive a fluorescence image 129 of an object 112, e.g., tissue of a patient. The fluorescence image 129 has been obtained from an original fluorescence image 128 by removing, e.g., all signals that are not fluorescence signals. The original fluorescence image 128, in turn, has been acquired by means of surgical imaging system 100, e.g., a surgical microscope. Thus, fluorescence image 129 can also be called a modified or processed fluorescence image.

The system 150 then generates an amplified fluorescence image 132, based on the fluorescence image 129. For amplifying, the fluoresce signals in the fluorescence image 129 or respective values (signals) in the image data can be amplified. The system 150 then generates an image pair 134, the image pair comprising the fluorescence image 129 and the amplified fluorescence image 132. The image pair 134 is then provided for training of a machine-learning algorithm, wherein the machine-learning algorithm is to be trained for use with said surgical imaging system 100 or another surgical imaging system. It is noted that multiple of such image pair can be provided. Such multiple image pairs are then also called training data.

In the following, it will be explained in more detail and based on an example how to obtain said fluorescence image 129 and said amplified fluorescence image 132, referring to Fig. 1

During a surgery, a surgeon 110 (user) uses the surgical microscope 100 (or another surgical imaging system) in order to view the surgical site, e.g., a patient 112 or a patient's brain. Said surgical microscope 100 can comprise an illumination optics 102 for visible or white light and an illumination optics 104 for excitation light for exciting fluorophores in tissue of the patient 112. Alternatively, appropriate filters for filtering wavelengths of light required for excitation might be used. An image sensor 106, e.g., a detector or camera, acquires fluorescence light, emanating from the illuminated tissue.

Image sensor 106 might also acquire white light. Alternatively, another image sensor can be used for white light.

In this way, the surgical microscope 100 is configured to perform a white light imaging mode 120 in which white light images 122 are acquired, and a fluorescence imaging mode 126, in which fluorescence images 128 are acquired. It is noted that the image sensor 106 might acquire raw data which are then processed to result in the white light images 122 or fluorescence images 128. Such processing of raw data can take place inside the image sensor 106 or another processor included in the surgical microscope 100 or in the system or controller 150.

It is noted that such white light images 122 or fluorescence images 128 can be produced or acquired during the surgery several times, depending on the mode used.

The original fluorescence image 128 can then be modified or processed, by removing all signals but fluorescence signals, in order to obtain the fluorescence image 129. This processing or modifying can be performed, e.g., in the system 150 or before.

The system 150 is configured to process the fluorescence images 128 or 129 or each of them, to generate either an amplified fluorescence image 132 or a background image 130, or both of them. The background image 130 can be, for example, an anatomy image that shows the actual object or tissue (e.g., brain). The background image can also be generated based on the fluorescence image 128.

A digital fluorescence image shows fluorescence signal coming from, e.g., tumor and dark background that prevents users from seeing anatomical structures easily (a little bit of anatomy around the tumor can sometimes be seen, but it is difficult). Clearly, here fluorescence signal is of high intensity (bright) and background signal is of low intensity (dark). This is not the case, however, with the fluorescence image in oculars where also background is bright enough for anatomical structures around tumor to be visible. Therefore, a problem is only with the digital fluorescence image.

The background image (also called anatomy or anatomy image) can take as input a digital fluorescence image and it can be generated in a way to display lower light intensity signals better than in the digital fluorescence image, thus increasing the visibility of otherwise dark anatomical structures which are "background" that surrounds the fluorescence signal. Therefore, the background image also amplifies the overall light intensity (fluorescence signal and non-fluorescence surrounding signal).

An amplified fluorescence image (also called HiFluo images) can take a background image and remove the non-fluorescence surrounding signal thus keeping only fluorescence signal. This increases the contrast of the fluorescence signal because the background/surrounding here is completely black. Because of the black background, the visibility of the low intensity fluorescence signals is increased.

Every time an amplified fluorescence image 132 is generated based on a fluorescence image 129, an image pair 134 comprising the fluorescence image 129 and the amplified fluorescence image 132 can be generated and provided as training data or part of it. For example, the image pairs 134 can be stored in a database 160 until required for training. It is noted that the white light images 122 and the background images 130 are not necessary for the training.

Besides, the white light images 122, the fluorescence images 129, the amplified fluorescence images 132 and the background images 130 can, for example, can be displayed on a display 170 of the surgical system 101 for the surgeon.

In an embodiment, the object, from which the fluorescence image has been obtained, comprises a test object 162, e.g., a test card. Such test object 162 can have multiple fluorophore targets of different fluorophore concentration. By means of example, four of such fluorophore targets 164 are shown in Fig. 1. The fluorescence images obtained therefrom are referred to by 129' (again, all signals but fluorescence signals can be removed, if required); these fluorescence images 129' can also be obtained using the surgical microscope 100. The amplified fluorescence images are then generated, based on the fluorescence images 129', comprising applying a noise-generating technique, e.g. Gaussian. The amplified fluorescence images obtained in this way are referred to by 132'. Such noise-generating technique can be applied by the system 150, for example.

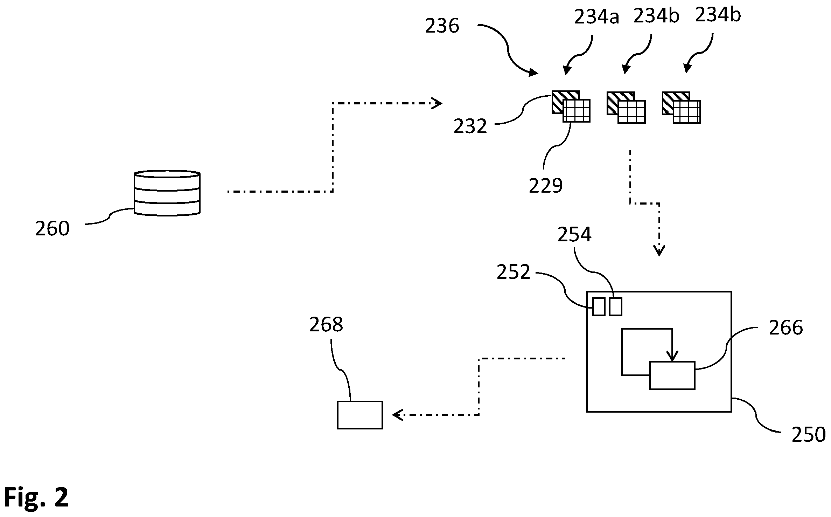

Fig. 2 schematically illustrates a system 250 for training of a machine-learning algorithm according to a further embodiment of the invention. The system 250 comprises one or more processors 252 and one or more storage devices 254. The system 250 can, for example, be a computer or a server, e.g., in the cloud (cloud computing).

The system 250 is configured to receive training data 236, e.g., from a database 260. The training data 236 comprises multiple image pairs. By means of example, three image pairs 234a, 234b, 234c are shown in Fig. 2. A typical number of images pairs used as training data can be, for example, hundreds or thousands of image pairs. Each image pair 234a, 234b, 234c comprises a fluorescence image 229 of an object and an amplified fluorescence image 232 of the object, wherein, for at least one of the multiple image pairs 234a, 234b, 234c, the fluorescence image 229 has been obtained using a surgical imaging system (with, e.g., removing all signals but fluorescence signals), and the amplified fluorescence image 232 has been generated, based on the fluorescence image 229.

Each or some of the image pairs can correspond to the image pairs 134 described with respect to Fig. 1; this, in particular includes the way of how to obtain such image pairs. It is noted that not all image pairs need to be acquired using the same surgical imaging system, rather, two or more different surgical imaging systems can be used.

The system 250 is further configured to adjust the machine-learning algorithm 266 based on the training data 236, such that the machine-learning algorithm 266 reduces noise of a target amplified fluorescence image. For the training of the machine-learning algorithm, e.g., comprising adapting weights of the machine-learning algorithm (or model or neural network), the fluorescence images 229 are used as ground truth. The system 250 then provides the trained machine learning algorithm 268 for use with the surgical imaging system that has been used for generating the training data, e.g., surgical imaging system 150 of Fig. 1. However, the trained machine learning algorithm 268 can also be provided for use with another similar or even other type of surgical imaging system.

In an embodiment the machine-learning algorithm is or is based on a Convolutional Neural Network (CNN), as mentioned above. An example of such CNN is PRIDNet convolutional neural network for image de-noising (Pyramid Real Image Denoising Network).

For training, the amplified fluorescence images 232 of an image pair can be used as input to the machine-learning algorithm, and the fluorescence images 229 of the respective image pairs can be used as a desired output of the machine-learning algorithm. As mentioned, the amplified fluorescence images are noisier than the original fluorescence images. The machine-learning algorithm shall, thus, reduce noise in an amplified fluorescence image (or, rather, an image), received as its input, such that (at best) no noise or at least less noise remains in this image.

In order to obtain this, e.g., weights of the machine-learning algorithm - it may be an artificial neural network - are to be adjusted. For example, such weights might be adjusted iteratively until a de-noised version of an input amplified fluorescence image, created by the machine-learning algorithm, corresponds (at least within pre-defined limits;) to the provided fluorescence image, which, in this case is a de-noised image.

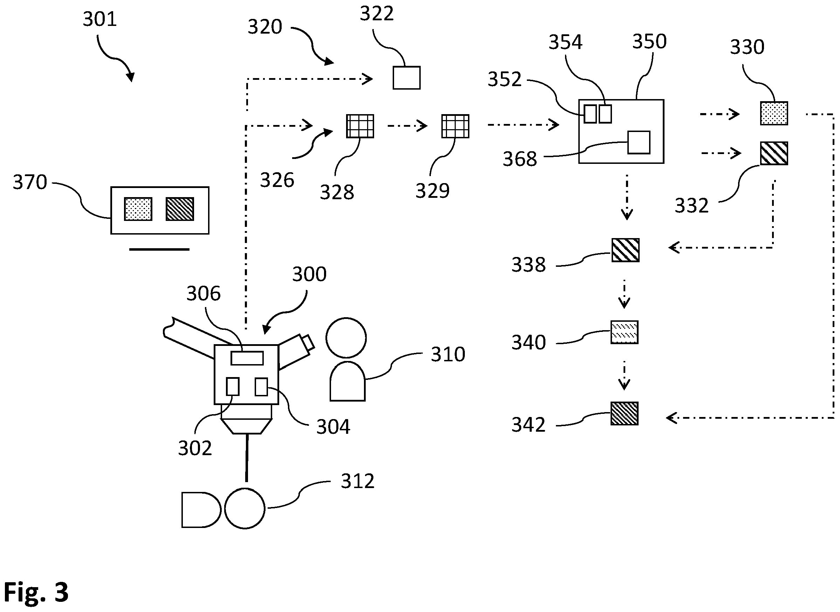

Fig. 3 schematically illustrates a system 350 for reducing noise in an amplified fluorescence image. This can also be called de-noising an amplified fluorescence image. This is an application of a (trained) machine-learning algorithm. The system 350 comprises one or more processors 352 and one or more storage devices 354. In an embodiment, system 350 is configured as a controller for a surgical imaging system 300 also shown in Fig. 3. The surgical imaging system 300 and the controller 350 can be part of a surgical system 301.

System 350 is configured to receive input data. The input data comprises an amplified fluorescence image 332 of an object. The amplified fluorescence image 332 has been generated based on a fluorescence image 329 obtained using the surgical imaging system 300 during a surgery. The system 350 then reduces noise in the amplified fluorescence image 332, by applying the trained machine-learning algorithm 368, in order to obtain a de-noised amplified fluorescence image 338. The trained machine-learning algorithm 368 can correspond to, for example, the trained machine-learning algorithm 268 obtained as described with respect to Fig. 2. The system 350 then provides output data. The output data comprises the de-noised amplified fluorescence image 338.

In an embodiment, the system 350 further detects, in the de-noised amplified fluorescence image 338, edges 340 of the fluorescence signal shown in the de-noised amplified fluorescence image 338. In an embodiment, the system 350 further composes said detected edges 340 with a background image 330 of the object, in order to obtain a composite image 342. Said background image 330 has been generated based on said fluorescence image 328. The composite image 342 is then provided and, e.g., displayed on a display 370 for a surgeon.

In the following, it will be explained in more detail and based on an example how to obtain said fluorescence image 329, said amplified fluorescence image 332, said de-noised amplified fluorescence image 338, and said background image 330, referring to Fig. 3

During a surgery, a surgeon 310 (user) uses the surgical microscope 300 (or another surgical imaging system) in order to view the surgical site, e.g., a patient 312 or a patient's brain. Said surgical microscope 300 can comprise an illumination optics 302 for visible or white light and an illumination optics 304 for excitation light for exciting fluorophores in tissue of the patient 312. Alternatively, appropriate filters for filtering wavelengths of light required for excitation might be used. An image sensor 306, e.g., a detector or camera, acquires fluorescence light, emanating from the illuminated tissue. Image sensor 306 might also acquire white light. Alternatively, another image sensor can be used for white light.

In this way, the surgical microscope 300 is configured to perform a white light imaging mode 320 in which white light images 322 are acquired, and a fluorescence imaging mode 326, in which fluorescence images 328 are acquired. It is noted that the image sensor 306 might acquire raw data which are then processed to result in the white light images 322 or fluorescence images 328. Such processing of raw data can take place inside the image sensor 306 or another processor included in the surgical microscope 300 or in the system or controller 350.

It is noted that such white light images 322 or fluorescence images 328 can be produced or acquired during the surgery several times, depending on the mode used.

The original fluorescence image 328 can then be modified or processed, by removing all signals but fluorescence signals, in order to obtain the fluorescence image 329. This processing or modifying can be performed, e.g., in the system 350 or before.

The system 350 is configured to process the fluorescence images 328 or 329 or each of them, to either an amplified fluorescence image 332 or a background image 330 or to both of them. The background image 330 can be, for example, an anatomy image that shows the actual object or tissue (e.g., brain). The background image can also be generated based on the fluorescence image 328.

Every time or, e.g., only when desired, an amplified fluorescence image 332 is generated based on a fluorescence image 329, noise in the amplified fluorescence image 332 is reduced, using or applying the trained machine-learning algorithm 368 as explained above, in order to obtain the de-noised amplified fluorescence image 338. Then, edges 340 are detected in the de-noised amplified fluorescence image 338. The edges 340 (or an image comprising said edges) is composed with the background image 330 to obtain a composite image 342 which can then be, for example, displayed on the display 370 of the surgical system 301 for assistance of the surgeon.

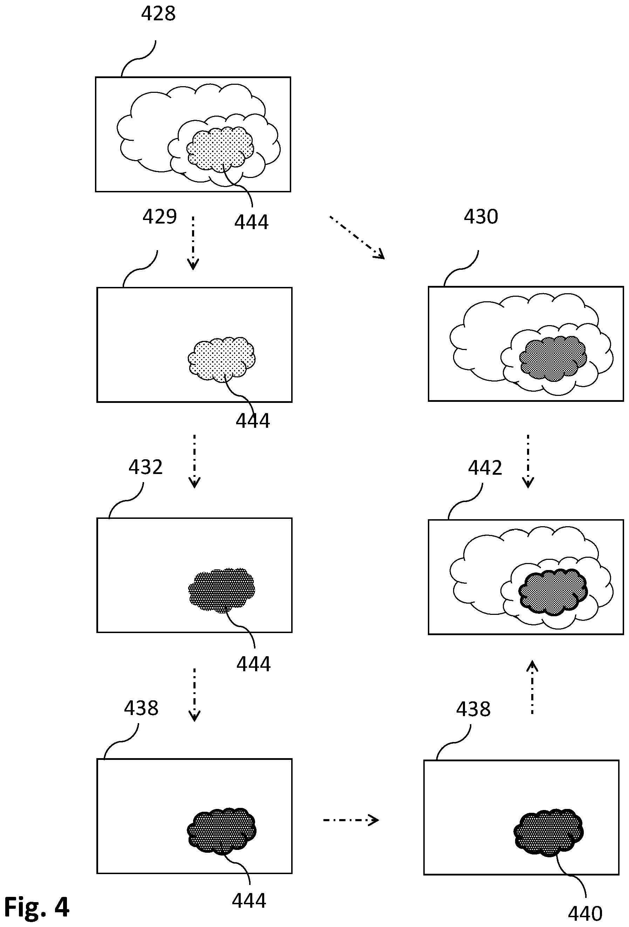

Fig. 4 schematically illustrates a way of how to use a de-noised amplified fluorescence image according to a further embodiment of the invention. The situation shown is basically similar to the one of Fig.3, however, more detailed images are shown.

A fluorescence image 428 can be obtained, for example, by means of a surgical imaging system like described with respect to Fig. 3. By means of example, the fluorescence image 428 shows an object like tissue, e.g., a brain of a patient. A region 444 of the object in the image is illustrated differently, which indicates that the region of the object, which corresponds to region 444 in the image, exhibits the fluorophore generating the actual fluorescence signal. From such original fluorescence image 428, all signals but fluorescence signals can be removed, resulting in fluorescence image 429.

Based on the fluorescence image 429, an amplified fluorescence image 432 is generated, by means of amplifying fluorescence signals in the fluorescence image 429. The region 444 now exhibits a stronger fluorescence signal, indicated by a darker shadow. However, due to the amplification, the image 432 is noisy, what is indicated by a noise edge of the region 444.

In addition, a background image 430 can be generated based on the fluorescence image 428. This background image 430 shows the anatomy of the object.

Using the trained machine-learning algorithm as explained above, noise of the amplified fluorescence image 432 can be removed, resulting in a de-noised amplified fluorescence image 438. This does not mean that all noise is removed but at least part of the noise present in the fluorescence image 432 is removed. This is indicated in the de-noised amplified fluorescence image 438 by means of a sharper edge of the region 444.

These edges 440 can now be identified in the de-noised amplified fluorescence image 438 much better than in the original fluorescence image 428 or 429. These edges 440 are then composed with the background mage 430 in order to obtain a composite image 442, which clearly shows the edges of a relevant region (region 444) in the background image. This composite image 442 can be shown to a surgeon, for example, on a display to assist the surgeon during the surgery. Edge detection is a typical process, e.g., using Sobel or Canny.

It is noted that described steps can be performed in real-time during the surgery, i.e., for every new fluorescence image obtained, such that the surgeon always can be provided with a current view.

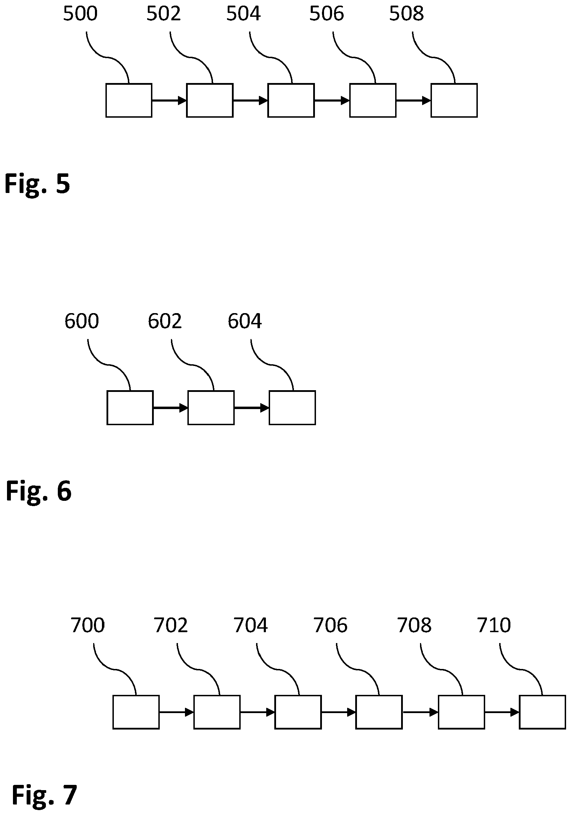

Fig. 5 schematically illustrates a computer-implemented method for generating training data for training of a machine-learning algorithm. In a step 500, a fluorescence image of an object is received. The fluorescence image has been obtained using a surgical imaging system. In step 502, an amplified fluorescence image is generated as well as the (new) fluorescence image can be generated by taking the original fluorescence image and removing the background signal (removing all signal except fluorescence) as explained above, based on the fluorescence image. In step 504, an image pair is generated, wherein the image pair comprises the fluorescence image and the amplified fluorescence image. In step 506, the image pair is provided for training of a machine-learning algorithm, wherein the machine-learning algorithm is to be trained for use with said or another surgical imaging system. For example, in step 508, the image pair is then stored in a data base for later use. Steps 500 to 508 can be repeated for every fluorescence image obtained when using a surgical imaging system in a fluorescence imaging mode.

Fig. 6 schematically illustrates a computer-implemented method for training of a machine-learning algorithm. In step 600, training data is received. The training data comprises multiple image pairs, each image pair comprising a (modified) fluorescence image of an object (e.g., with all signals but fluorescence signals removed) and an amplified fluorescence image of the object (the amplified fluorescence image having been obtained from the modified fluorescence image). For at least one of the multiple image pairs, preferably for more or all of them, the fluorescence image has been obtained by means of a surgical imaging system. The amplified fluorescence image has been generated, based on the fluorescence image.

In Step 602, the machine-learning algorithm is adjusted (trained), based on the training data, such that the machine-learning algorithm (later, when applied) reduces noise of a target amplified fluorescence image. The fluorescence images are used as ground truth. This step can comprise, for example, adjusting weights of a neural network like a CNN. In step 604, the trained machine learning algorithm is provided for use with said or another surgical imaging system.

Fig. 7 schematically illustrates a computer-implemented method for reducing noise in an amplified fluorescence image, i.e., an application of the machine-learning algorithm. In step 700, input data is received; the input data comprises an amplified fluorescence image of an object, wherein the amplified fluorescence image has been generated based on a fluorescence image obtained using a surgical imaging system during a surgery. In step 702, noise in the amplified fluorescence image is reduced, by applying the trained machine-learning algorithm, in order to obtain a de-noised amplified fluorescence image. In step 704, output data is provided; the output data comprises the de-noised amplified fluorescence image.

In an embodiment, in step 706, edges the object shown in the de-noised amplified fluorescence image are detected in the de-noised amplified fluorescence image. In an embodiment, in step 708, said detected edges are composed with a background image of the object, in order to obtain a composite image. Said background image has been generated based on said fluorescence image. In step 710, said composite image is provided and, e.g., a display is controlled to show the composite image on it.

As used herein the term "and/or" includes any and all combinations of one or more of the associated listed items and may be abbreviated as "f".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a surgical imaging system comprising a surgical system as described in connection with one or more of the Figs. 1 to 7. Alternatively, a surgical imaging system may be part of or connected to a surgical system as described in connection with one or more of the Figs. 1 to 7. Fig. 1 shows a schematic illustration of a surgical system 101 configured to perform a method described herein. The surgical system 101 comprises a surgical imaging system 100 and a computer system 150. The surgical imaging system 100 is configured to take images and is connected to the computer system 150. The computer system 150 is configured to execute at least a part of a method described herein. The computer system 150 may be configured to execute a machine learning algorithm. The computer system 150 and surgical imaging system 100 may be separate entities but can also be integrated together in one common housing. The computer system 150 may be part of a central processing system of the surgical imaging system 100 and/or the computer system 150 may be part of a subcomponent of the surgical imaging system 100, such as a sensor, an actor, a camera or an illumination unit, etc. of the surgical imaging system 100.

The computer system 150 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 150 may comprise any circuit or combination of circuits. In one embodiment, the computer system 150 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system X20 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system X20 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 150 may also include a display device, one or more speakers, and a keyboard and/or controller, which can include a mouse, trackball, touch screen, voice-recognition device, or any other device that permits a system user to input information into and receive information from the computer system 150.

This applies correspondingly to surgical system 301, surgical imaging system 300 and computer system 350.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component. In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree. Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge. Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input. Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### List of Reference Signs

- 100, 300: surgical imaging system
- 101, 301: surgical system
- 102, 104, 302, 304: illumination optics
- 106, 306: imaging sensor
- 110,310: surgeon
- 112, 312: patient
- 120, 320: white light imaging mode
- 122, 322: white light image
- 126, 326: fluorescence imaging mode
- 128, 128', 328, 428: original fluorescence image
- 129, 129', 229, 329, 429: fluorescence image
- 130, 330, 430: background image
- 132, 132' 232, 332, 432: amplified fluorescence image
- 134, 234a, 234b, 234c: image pair
- 150, 250, 350: system
- 152, 252, 352: processor
- 154, 254, 354: storage device
- 160,260: database
- 162: test object
- 164: fluorophore targets
- 170, 370: display

- 236: training data
- 266: machine-learning algorithm
- 268, 368: trained machine-learning algorithm

- 338, 438: de-noised amplified fluorescence image
- 340,440: edges
- 342, 442: composite image
- 444: region

- 500-508, 600-604, 700-710: method steps

## Claims

1. A system (150) comprising one or more processors (152) and one or more storage devices (154), for generating training data for training of a machine-learning algorithm, wherein the system is configured to:
receive a fluorescence image (129, 129') of an object (112, 162), wherein the fluorescence image (129, 129') has been obtained using a surgical imaging system (100);
generate an amplified fluorescence image (132, 132'), based on the fluorescence image (128);
generate an image pair (134), the image pair comprising the fluorescence image (129, 129') and the amplified fluorescence image (132, 132'); and
provide the image pair (134) for training of a machine-learning algorithm, wherein the machine-learning algorithm is to be trained for use with said or another surgical imaging system.

2. The system (150) of claim 1, wherein the fluorescence image has been obtained by means of the surgical imaging system (100) during a surgery,
wherein the amplified fluorescence image (132) is generated, based on the fluorescence image, comprising amplifying at least a part of signal values of the fluorescence image (129).

3. The system (150) of claim 1, wherein the object, from which the fluorescence image (129') has been obtained, comprises a test object (162) having multiple fluorophore targets (164) of different fluorophore concentration,
wherein the amplified fluorescence image (132') is generated, based on the fluorescence image (129'), comprising applying a noise-generating technique.

4. The system (150) of any one of the preceding claims, wherein the fluorescence image (129, 129') has been obtained from an original fluorescence image (128, 128') by removing at least a part of or all signals that are not fluorescence signals, wherein the original fluorescence image (128, 128') has been acquired by means of the surgical imaging system (100).

5. A controller for a surgical imaging system (100), wherein the controller comprises or is configured as the system (150) of any one of claims 1 to 4, wherein the surgical imaging system is configured to perform a fluorescence imaging mode (126), wherein, in the fluorescence imaging mode, the surgical imaging system (100) is configured to acquire fluorescence images (128) of the object (122),
wherein the controller is configured to:
control the surgical imaging system (100) to obtain the fluorescence image of the object.

6. A computer-implemented method for generating training data for training of a machine-learning algorithm, the method comprising:
Receiving (500) a fluorescence image of an object, wherein the fluorescence image has been obtained using a surgical imaging system;
generating (502) an amplified fluorescence image, based on the fluorescence image;
generating (504) an image pair, the image pair comprising the fluorescence image and the amplified fluorescence image; and
providing (506) the image pair for training of a machine-learning algorithm, wherein the machine-learning algorithm is to be trained for use with said or another surgical imaging system.

7. A system (250) comprising one or more processors (252) and one or more storage devices (254), for training of a machine-learning algorithm (266), wherein the system is configured to:
receive training data (236), the training data comprising: multiple image pairs (234a, 234b, 234c), each image pair comprising a fluorescence image (229) of an object and an amplified fluorescence image (232) of the object, wherein, for at least one of the multiple image pairs, the fluorescence image has been obtained using a surgical imaging system, and the amplified fluorescence image has been generated, based on the fluorescence image;
adjust the machine-learning algorithm based on the training data (236), such that the machine-learning algorithm reduces noise of a target amplified fluorescence image, wherein the fluorescence images (229) are used as ground truth; and
provide the trained machine learning algorithm (268) for use with said or another surgical imaging system.

8. The system (250) of claim 7, wherein the machine-learning algorithm (266) is or is based on a Convolutional Neural Network.

9. A trained machine-learning algorithm (266) for use with a surgical imaging system, trained by:
receiving training data (236), the training data comprising: multiple image pairs (234a, 234b, 234c), each image pair comprising a fluorescence image (229) of an object and an amplified fluorescence image (232) of the object, wherein, for at least one of the multiple image pairs, the fluorescence image has been obtained using said or another surgical imaging system, and the amplified fluorescence image has been generated, based on the fluorescence image, comprising amplifying at least a part of signal values of the fluorescence image; and
adjusting the machine learning algorithm based on the training data (236), such that the machine-learning algorithm reduces noise of a target amplified fluorescence image, wherein the fluorescence images are used as ground truth.

10. A computer-implemented method for training of a machine-learning algorithm, comprising:
receiving (600) training data, the training data comprising: multiple image pairs, each image pair comprising a fluorescence image of an object and an amplified fluorescence image of the object, wherein, for at least one of the multiple image pairs, the fluorescence image has been obtained using a surgical imaging system, and the amplified fluorescence image has been generated, based on the fluorescence image;
adjusting (602) the machine-learning algorithm based on the training data, such that the machine-learning algorithm reduces noise of a target amplified fluorescence image, wherein the fluorescence images are used as ground truth; and
providing (604) the trained machine learning algorithm for use with said or another surgical imaging system.

11. A system (350) comprising one or more processors (352) and one or more storage devices (254), for reducing noise in an amplified fluorescence image, wherein the system is configured to:
receive input data, the input data comprising: an amplified fluorescence image (332, 432) of an object, wherein the amplified fluorescence image (332, 432) has been generated based on a fluorescence image (329, 429) obtained using a surgical imaging system (300) during a surgery,
reduce noise in the amplified fluorescence image (332, 432), by applying the trained machine-learning algorithm (268) of claim 9, in order to obtain a de-noised amplified fluorescence image (338, 438); and
provide output data, the output data comprising: the de-noised amplified fluorescence image (338, 438).

12. The system (350) of claim 11, further configured to:
detect, in the de-noised amplified fluorescence image (338, 438), edges (340, 440) of the fluorescence signal shown in the de-noised amplified fluorescence image.

13. The system (350) of claim 12, further configured to:
compose said detected edges (340, 440) with a background image (330, 430) of the object, in order to obtain a composite image (342, 442), wherein said background image (330, 430) has been generated based on said fluorescence image; and
provide said composite image.

14. A controller for a surgical imaging system, wherein the controller comprises or is configured as the system (350) of any one of claims 11 to 13, wherein the surgical imaging system is configured to perform a fluorescence imaging mode, wherein, in the fluorescence imaging mode, the surgical imaging system is configured to acquire fluorescence images of an object, and
wherein the controller is configured to: control the surgical imaging system to obtain the fluorescence image.

15. A surgical system (101, 301), comprising a surgical imaging system (100, 300) with an image sensor and the system of any one of claims 1 to 4 or 11 to 13 or the controller of claim 5 or 14, wherein the surgical imaging system is configured to perform a fluorescence imaging mode, wherein, in the fluorescence imaging mode, the surgical imaging system is configured to acquire fluorescence images of the object.

16. A computer-implemented method for reducing noise in an amplified fluorescence image, comprising:
Receiving (700) input data, the input data comprising: an amplified fluorescence image of an object, wherein the amplified fluorescence image has been generated based on a fluorescence image obtained using a surgical imaging system during a surgery,
reducing (702) noise in the amplified fluorescence image, by applying the trained machine-learning algorithm of claim 9, in order to obtain a de-noised amplified fluorescence image; and
providing (704) output data, the output data comprising: the de-noised amplified fluorescence image.

17. A computer program with a program code for performing the method of claim 10 or 16, when the computer program is run on a processor.
